# EUROPEAN PATENT SPECIFICATION

(11) **EP 0 544 371 B1**
(45) Date of publication and mention of the grant of the patent: **14.02.1996**
(21) Application number: 92203593.6
(22) Date of filing: 20.11.1992
(51) Int. Cl.: B60P 3/34, B60P 3/36

(54) **Roadside kitchen**
Küchenblock für Camping
Bloc cuisine pour le camping

(30) Priority: 21.11.1991 NL 9101955
(43) Date of publication of application: 02.06.1993
(73) Proprietor: Holtkamp, Egbert Berend, NL-9561 JK Ter Apel (NL)
(72) Inventor: Holtkamp, Egbert Berend, NL-9561 JK Ter Apel (NL)
(74) Representative: Smulders, Theodorus A.H.J., Ir.

(56) References cited:
- FR-A- 1 353 575
- FR-A- 1 441 600
- FR-A- 2 139 853
- FR-A- 2 201 991
- FR-A- 2 535 265
- "Holtkamp Flyer" by H. Kroon, Kampeer + Caravankampioen nr. 9, 1983 ANWB, The Hague, The Netherlands.

## Description

The invention relates to a roadside kitchen unit for use with a caravan in particular a folding caravan, said kitchen unit having a travelling position wherein it is detachably supported by the chassis of the caravan outside the caravan and a further position, wherein the kitchen unit is detached from the chassis and rests on supporting legs.

Such a kitchen unit according to the characteristics of the preamble of claim 1 is known from practice and has been disclosed for instance in an article titled "Holtkamp Flyer" by H. Kroon, Kampeer + Caravankampioen nr. 9, 1983 ANWB, The Hague, The Netherlands.

Folding caravans comprise a chassis provided with an axle and wheels, the chassis comprising a drawbar and a coupling for attaching the drawbar to a towing hook of a car. Mounted on the chassis is a box which, in folded condition, contains the part of the folding caravan that can be folded out to form a camping quarter. In modern folding caravans it is conventional to use a kitchen unit, mounted in front of the box on the drawbar or on the front portion of the chassis as long as the folding caravan is not folded out. An advantage of arranging the kitchen unit outside the box is that the kitchen unit is also accessible during travelling, when one wishes to stop alongside the road or in a parking lot, and can be used for instance to make coffee or soup or the like, without the necessity of folding out the folding caravan in whole or in part.

An advantage of the arrangement in front of the box is that in that position the kitchen is little vulnerable and can be combined relatively easily with a gas cylinder, which is normally likewise positioned on the drawbar, in any case in front of the box.

When the destination has been reached and the folding caravan is folded out, the roadside kitchen is often detached from the drawbar or front portion of the chassis and arranged elsewhere, for instance inside the folding caravan or underneath an awning. For this purpose, the roadside kitchen is mounted so as to be detachable as a unit and comprises legs capable of being folded out and/or extended.

As, in addition to the gas cylinder mentioned above, a modern roadside kitchen often also comprises a cooker, a refrigerator and a number of cupboards and drawers filled with food and kitchen utensils, such a kitchen unit is rather heavy and therefore cannot readily be moved from the above mentioned travelling position in front of the box to a camping position and the other way round. For one person to move the unit is difficult, if not impossible.

The object of the invention is to provide a solution to this problem. To this end, according to the invention, a roadside kitchen of the type described above is characterized in that at least one of the legs comprises a travelling wheel.

The invention will be further described hereinafter with reference to the accompanying drawings of an exemplary embodiment.
Figure 1 schematically shows in side view a folding caravan comprising a roadside kitchen;
Figure 2 schematically shows in top view the folding caravan of Figure 1;
Figure 3 schematically shows in perspective an exemplary embodiment of a roadside kitchen according to the invention; and
Figure 4 schematically shows a variant of Figure 3.

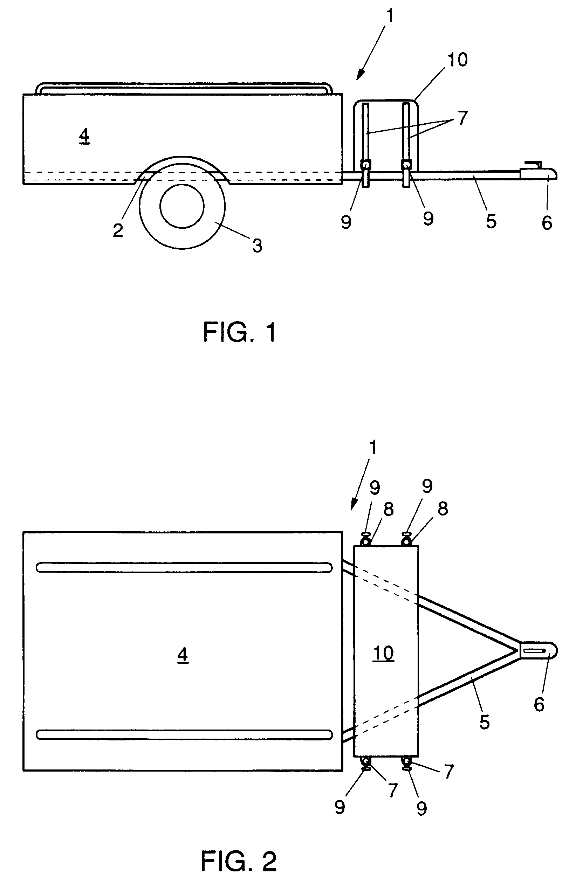

Figure 1 schematically shows in top view a folding caravan 1, with a chassis 2 comprising in a conventional manner a set of wheels 3, of which one is visible in Figure 1. The chassis carries a box 4, which contains the expandable part of the folding caravan and comprises at the front thereof a pole 5 with a coupling 6 for attaching the pole to a towing hook of a car.

Arranged on drawbar 5 and/or the front portion of chassis 2 is a kitchen unit 10. The kitchen unit 10 or roadside kitchen is detachably mounted in a manner not illustrated. During breaks in a journey, the kitchen can be used in the position shown. This does not require that the folding caravan be unfolded. For a longer stay in one place, when the folding caravan is completely unfolded and erected, the kitchen unit is usually removed from the drawbar and set in a different suitable place. For this purpose, the kitchen unit can be provided with collapsible or extensible legs, as indicated, by way of example, at 7 and 8. The legs can slide upwards and downwards and be fixed in a retracted transport position or in a low service position by means of a clamping bolt or the like, operated by a knob 9.

In addition to cupboards and/or drawers with kitchen utensils and food, modern roadside kitchens also comprise a cooker, a sink and a refrigerator. Consequently, the kitchen unit is rather heavy and difficult to move. As observed above, lifting the kitchen unit from the drawbar requires much force. It is very difficult for any one person to move such a kitchen.

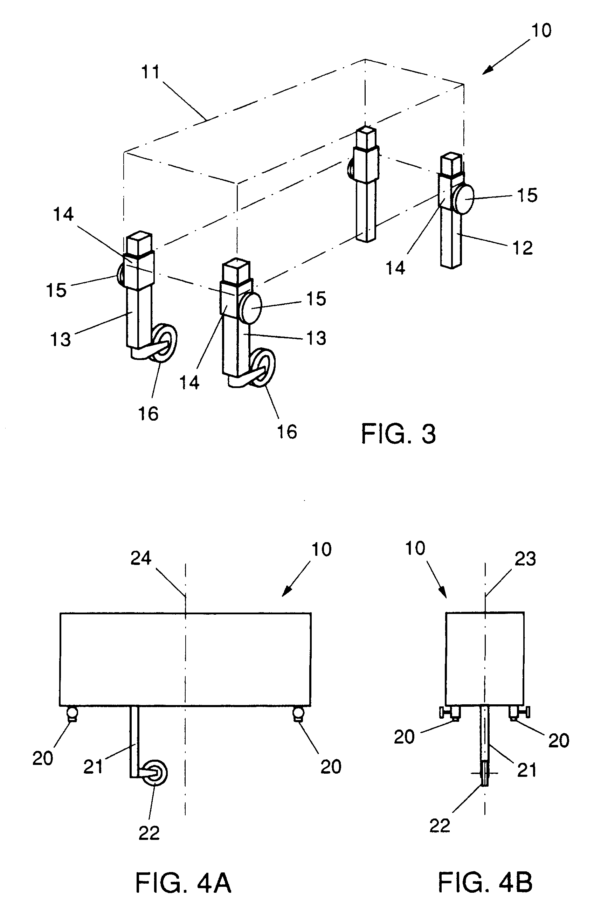

Figure 3 schematically shows in perspective an example of a roadside kitchen according to the invention. The roadside kitchen 10 shown comprises a transparently drawn housing 11, comprising extensible supporting legs 12,13. In the example shown, the supporting legs can be slid upwards and downwards within guides 14 mounted inside the housing, the guides in this example consisting of short lengths of tube snugly fitting over the supporting legs. The supporting legs can be fixed in a conventional manner by means of clamping bolts, which, in the example shown, are provided with a relatively large knob 15, so that the clamping bolts can be loosened or tightened manually. The knob can be round, as shown, but it can also be differently shaped, for instance star-shaped, so as to promote ease of operation.

Supporting legs 13 comprise supporting wheels 16. By using the supporting wheels, it is possible to move the roadside kitchen in the manner of a barrow. Hence, the kitchen unit need no longer be lifted.

The kitchen unit shown can be removed from a pole by first adjusting the wheeled legs 13 to the extended position. To this end, the clamping bolts are loosened by means of knobs 15, the legs are slid downwards until they reach the ground, and the clamping bolts are fastened again. Subsequently, the kitchen unit is gripped at the other end, where the non-wheeled legs 12 are located, and lifted. Depending on the construction, knobs 15 of the clamping bolts for legs 12 or legs 12 themselves can function as hand grips. It is also possible to provide separate hand grips. Subsequently, the kitchen unit is moved to a desired place in the manner of a barrow. Finally, the non-wheeled legs are lowered. The above-described operations are carried out in reverse order if the kitchen unit has to be placed onto the pole again.

It is observed that after the foregoing, various modifications will readily occur to anyone of ordinary skill in the art. For instance, all legs could be provided with wheels. In that case, at least two wheels should preferably be lockable. Such lockable wheels are commercially available.

It is also possible to apply the inventive concept if the kitchen unit has three legs, or collapsible or unscrewable legs.

Further, the legs used normally, mostly located near the corners of the kitchen unit, could be maintained without modification and one or more additional lowerable legs comprising a travelling wheel could be provided. When using one additional leg comprising a travelling wheel, this leg can advantageously be provided, as viewed in transverse direction, in the centre of the kitchen unit and, as viewed in longitudinal direction, it can likewise be provided slightly towards the centre so as to obtain a better distribution of weight.

Such an embodiment is schematically shown in Figure 4. Figure 4 shows a front view (A) and a side view (B) of a roadside kitchen with extensible legs 20 without wheels and an additional lowerable leg 21 comprising a travelling wheel 22. Leg 21 is located approximately in the longitudinal median plane 23, spaced from one of the ends of the kitchen unit, between that end and the transverse median plane 24.

It is possible to provide such a leg 21 on both sides of the transverse median plane.

It is further observed that the invention also applies to a roadside kitchen provided in a different location, for instance at the back of the box of a folding caravan.

Further, a lowerable leg can comprise more than one wheel, for instance two wheels disposed side by side. The term "lowerable" is meant to indicate that the legs can be adjusted in one way or another from a non-supporting position to a supporting position, for instance by extension or folding down.

Finally, it is observed that the invention can also be used if the housing contains no kitchen or no complete kitchen. In that case, the housing can for instance be a box that is suitable for various purposes, which can be utilized in any type of caravan, i.e., a folding caravan as well as an ordinary caravan.

These and similar modifications are understood to fall within the scope of the invention as defined by the appended claims.

## Claims

1. A roadside kitchen unit for use with a caravan in particular a folding caravan (1), said kitchen unit (10) having a travelling position wherein it is detachably supported by the chassis (2,5) of the caravan (1) outside the caravan (1) and a further position, wherein the kitchen unit (10) is detached from the chassis (2,5) and rests on supporting legs (7,8), characterized in that at least one of the supporting legs (7,8) is provided with a wheel (16;22) in such a manner that the kitchen unit (10) may be moved in the manner of a wheel barrow.

2. A roadside kitchen unit according to claim 1, characterized in that near the two corners at one end of a housing (11) of the kitchen unit (10) lowerable wheeled legs (13;21) are mounted, and near the two corners at the other end of the housing, lowerable legs (12;20) without wheels are mounted.

3. A roadside kitchen unit according to claim 1, characterized in that at least one lowerable wheeled leg (13;21) is mounted at the longitudinal median plane (23) of the housing (11).

4. A roadside kitchen unit according to claim 3, characterized in that the at least one lowerable leg (13;21) is spaced from the nearest end of the housing (11).

5. A roadside kitchen unit according to any one of the preceding claims, characterized by means (12;15) functioning as hand grip, provided at at least one of the ends of the housing (11), whilst said housing (11), at least at the other end thereof, is provided with one or more wheeled lowerable legs (13;21).

6. A roadside kitchen unit according to claim 5, characterized in that the means functioning as hand grip comprise knobs (15) of clamping devices for fixing lowerable legs (13).

7. A roadside kitchen unit according to any one of the preceding claims, characterized in that all lowerable legs (13;21) comprise travelling wheels (16;22) and at least one of said travelling wheels comprises a brake.

8. A folding caravan (1) comprising a detachably mounted kitchen unit (10), characterized in that the kitchen unit (10) is constructed as the roadside kitchen unit according to any one of claims 1-7.

9. A box, designed to be detachably mounted on the chassis (2,5) of a caravan as an additional accessory, characterized in that the box is constructed as the housing (11) of the roadside kitchen unit (10) according to any one of claims 1-7.

10. A caravan comprising a box according to claim 9.

## Patentansprüche

1. Campingküchenblock zur Verwendung bei einem Wohnwagen, insbesondere Faltwohnwagen (1), welcher Küchenblock (10) eine Fahrtstellung, wobei dieser von dem Chassis (2, 5) des Wohnwagens (1) außerhalb des Wohnwagens (1) abnehmbar unterstützt ist, und eine weitere Stellung, wobei der Küchenblock (10) von dem Chassis (2, 5) abgenommen ist und auf Stützbeinen (7, 8) ruht, aufweist, dadurch gekennzeichnet, daß mindestens eines der Stützbeine (7, 8) derart mit einem Rad (16; 22) versehen ist, daß der Küchenblock (10) schubkarrenartig fortbewegt werden kann.

2. Campingküchenblock nach Anspruch 1, dadurch gekennzeichnet, daß nahe den zwei Ecken an einem Ende eines Gehäuses (11) des Küchenblocks (10) mit Rädern versehene senkbare Beine (13; 21) montiert sind und daß nahe den zwei Ecken am anderen Ende des Gehäuses senkbare Beine (12; 20) ohne Räder montiert sind.

3. Campingküchenblock nach Anspruch 1, dadurch gekennzeichnet, daß in Höhe der Mittellängsebene (23) des Gehäuses (11) mindestens ein mit einem Rad versehenes senkbares Bein (13; 21) montiert ist.

4. Campingküchenblock nach Anspruch 3, dadurch gekennzeichnet, daß das mindestens eine senkbare Bein (13; 21) sich im Abstand von dem nächstliegenden Ende des Gehäuses (11) befindet.

5. Campingküchenblock nach mindestens einem der vorhergehenden Ansprüche, gekennzeichnet durch als Handgriff fungierende Mittel (12; 15), die an mindestens einem der Enden des Gehäuses (11) angebracht sind, während mindestens am anderen Ende des Gehäuses (11) ein oder mehrere mit Rädern versehene senkbare Beine (13; 21) angebracht sind.

6. Campingküchenblock nach Anspruch 5, dadurch gekennzeichnet, daß die als Handgriff fungierenden Mittel Knöpfe (15) von Klemmvorrichtungen zum Feststellen senkbarer Beine (13) umfassen.

7. Campingküchenblock nach mindestens einem der vorhergehenden Ansprüche, dadurch gekennzeichnet, daß alle senkbaren Beine 13; 21) mit Laufrädern (16; 22) versehen sind und daß mindestens eines der Laufräder mit einer Bremse versehen ist.

8. Faltwohnwagen (1), versehen mit einem abnehmbar montierten Küchenblock (10), dadurch gekennzeichnet, daß der Küchenblock (10) als Campingküchenblock nach einem der Ansprüche 1 bis 7 ausgebildet ist.

9. Behälter, eingerichtet zur abnehmbaren Befestigung als Zubehörteil auf dem Chassis (2, 5) eines Wohnwagens, dadurch gekennzeichnet, daß der Behälter als das Gehäuse (11) des Campingküchenblocks (10) nach einem der Ansprüche 1 bis 7 ausgebildet ist.

10. Wohnwagen, versehen mit einem Behälter nach Anspruch 9.

## Revendications

1. Bloc cuisine de camping à utiliser avec une caravane, en particulier avec une caravane pliante (1), ledit bloc cuisine (10) possédant une position de voyage dans laquelle il est soutenu de manière détachable par le châssis (2, 5) de la caravane (1) à l'extérieur de la caravane (1) et une autre position, dans laquelle le bloc cuisine (10) est détaché du châssis (2, 5) et repose sur des pieds de support (7, 8), caractérisé en ce qu'au moins un des deux pieds de support (7, 8) est muni d'une roulette (16; 22) de manière telle que le bloc cuisine (10) puisse être déplacé à la manière d'une brouette.

2. Bloc cuisine selon la revendication 1, caractérisé en ce qu'à proximité des deux coins à une extrémité d'un boîtier (11) du bloc cuisine (10), des pieds abaissables sur roulettes (13, 21) sont fixés et, à proximité des deux coins à l'autre extrémité du boîtier, des pieds abaissable (12, 20) sans roulette sont montés.

3. Bloc cuisine selon la revendication 1, caractérisé en ce qu'au moins un pied abaissable à roulette (13, 21) est fixé à hauteur du plan médian longitudinal (23) du boîtier (11).

4. Bloc cuisine pour camping selon la revendication 3, caractérisé en ce qu'au moins un pied abaissable (13, 21) est espacé de l'extrémité la plus proche du boîtier (11).

5. Bloc cuisine pour camping selon l'une quelconque des revendications précédentes, caractérisé par des moyens (12, 15) fonctionnant comme une poignée manuelle prévue à au moins une des extrémités du boîtier (11), tandis que ledit boîtier (11), du moins à l' autre extrémité, est muni d'un ou plusieurs pieds abaissables à roulette (13, 21).

6. Bloc cuisine de camping selon la revendication 5, caractérisé en ce que les moyens faisant office de poignée manuelle comprennent des boutons (15) de dispositifs de serrage pour fixer des pieds abaissables (13).

7. Bloc cuisine de camping selon l'une quelconque des revendications précédentes, caractérisé en ce que tous les pieds abaissables (13, 21) comprennent des roulettes de déplacement (16, 22) et au moins une desdites roulettes de déplacement comprend un frein.

8. Caravane pliante (1) comprenant un bloc cuisine fixé de manière détachable (10) caractérisé en ce que le bloc cuisine (10) est construit comme le bloc cuisine de camping selon l'une quelconque des revendications 1 à 7.

9. Boîtier conçu pour être fixé de manière détachable au châssis (2, 5) d'une caravane comme un accessoire supplémentaire, caractérisé en ce que le boîtier est construit comme le boîtier (11) du bloc cuisine de camping (10) selon l'une quelconque des revendications 1 à 7.

10. Caravane comprenant un boîtier selon la revendication 9.
